# EUROPEAN PATENT SPECIFICATION

(11) **EP 2 752 051 B1**
(45) Date of publication and mention of the grant of the patent: **17.02.2021**
(21) Application number: 12759594.0
(22) Date of filing: 04.09.2012
(51) Int. Cl.: H04W 36/14, H04W 36/04, H04W 8/02, H04W 36/32

(54) **SMALL CELLS IMPLEMENTING MULTIPLE AIR INTERFACES**
KLEINE ZELLEN ZUR HERSTELLUNG MEHRERER FUNKSCHNITTSTELLEN
PETITES CELLULES METTANT EN UVRE DE MULTIPLES INTERFACES RADIO

(30) Priority: 06.09.2011 US 201161531311 P
(43) Date of publication of application: 09.07.2014
(73) Proprietor: Intel Corporation, Santa Clara, CA 95054 (US)
(72) Inventor: SHARONY, Jacob, Santa Ana, CA 92705 (US); SHEIKH, Khurram, Parviz, Santa Ana, CA 92705 (US)
(74) Representative: Goddar, Heinz J.
(86) International application number: PCT/US2012/053680
(87) International publication number: WO 2013/036487

(56) References cited:
- EP-A1- 1 950 992
- US-A1- 2004 095 912
- US-A1- 2005 053 034
- US-A1- 2011 103 349

## Description

### BACKGROUND

Wireless networks are networks that use radio waves to carry information from one node in the network to one or more other nodes in the network. Wired communication can also be used in portions of a wireless network, such as between cells or access points. Wireless networks are used in connection with many applications, including, for example, satellite communications systems, portable digital assistants (PDAs), laptop computers, and mobile devices (including cellular telephones and user equipment). Users of such applications can connect to a network as long as the user is within range of such a wireless communication technology. The range of the wireless communication technology can vary depending on the deployment.

Cellular wireless networks are characterized by the use of base stations that provide radio coverage for a geographic area, with multiple base stations arranged to provide contiguous radio coverage over a larger area. Generally, when a mobile station is positioned within a coverage area of a base station, the mobile station can communicate in accordance with an air interface communication protocol with the base station. In turn, the base station can provide voice and data access to the mobile station via one or more circuit-switched, packet-switched signaling or transport networks.

The geographic coverage area of a base station is sometimes defined in terms of a geometric shape of a cell and base stations can often be referred to as "cells." Generally, the coverage area associated with a given cell may be logically divided geographically into a number of sectors, with each sector being defined respectively by radiation patterns from directional antenna components or antennas of the respective base station. Base stations are typically not associated with any subscriber or small group of subscribers in particular. Rather, a service provider will attempt to location base stations in publicly-accessible locations for use by the service provider's customers generally.

Traditional base stations include macro cell transceivers that are typically configured to provide wireless communications for users having properly configured mobile devices over several kilometers. The wireless communications correspond to one or more wireless communication air interface standards, such as second, third or fourth generation air interface standards. To address gaps in a macro network coverage and for other reasons such as for relief from capacity constraints, macro network service providers have recently shown interest in lighter infrastructure referred to as pico cells, which may also be referred to as pico cells, pico base stations, pico BTSs, and by other names. Typical pico cell base stations can include transceivers that provide wireless communications for the properly configured mobile devices within several hundreds of meters of a particular pico cell. Illustratively, the pico cells are configured to operate in accordance with the same wireless communication air interface standards. The combination of macro and pico cells by a service provider can be considered a heterogeneous network, in which the service provider may attempt traffic offloading from macro base stations to pico cell base stations.

In addition to supporting mobile air interface standards utilized by the macro cell transceivers, such as second, third and fourth generation air interface standards and beyond, pico cells can support additional radio communication protocols. Such additional radio communication protocols, such the IEEE 802.11 communication protocol, often referred to as ("Wi-Fi"). Wi-Fi standards may be unlicensed or implemented differently from the more traditional mobile air interface standards.

US 2005/053034 A1 relates to a seamless vertical handoff method allowing the network applications and connections on a mobile node to continue without disruption as it moves within a wireless overlay network that comprises multiple possibly overlapping layers of wireless networks (e.g. a WLAN and a WWAN) with different underlying technologies, providing mobile roaming capabilities.

### BRIEF DESCRIPTION OF THE DRAWINGS

FIGURE 1 is a functional block diagram of an embodiment of a pico cell.
FIGURE 2 is a block diagram of an embodiment of a heterogeneous network including a plurality of pico cells;
FIGURES 3A and 3B are block diagrams of the heterogeneous network of FIGURE 2 illustrating one embodiment of a handoff mechanism;
FIGURES 4A and 4B illustrate the methodology of the handoff mechanism within a single pico cell.
FIGURE 5 illustrates the handoff process within a pico cell from LTE to Wi- Fi.
FIGURE 6 illustrates the handoff process within a pico cell from Wi-Fi to LTE.
FIGURES 7A, 7B, and 7C illustrate an embodiment of a control mechanism for handoffs between pico cells.
FIGURE 8 illustrates another embodiment of a handoff between pico cells.
FIGURES 9A, 9B, and 9C illustrate an embodiment of translation of quality of service standards within a heterogeneous network.
FIGURE 10 illustrates a real-time location system (RLTS) using an embodiment of the pico cell.

### DETAILED DESCRIPTION

Generally described, the present disclosure relates to communication networks including a plurality of pico cells. Specifically, aspects of the present disclosure relate to the management of inter-pico cell communication in accordance multiple air interfaces supported within individual pico cells. Additionally, aspects of the present disclosure relate to the management of intra-pico cell communication in accordance with communication networks implementing multiple pico cells. In an illustrative embodiment, handoffs between multiple radio technologies within a single pico cell may utilize home-foreign agent technology used in the Mobile IP (MIP) standard. In other aspects, pico cells coordinate handoffs through the use of a controller, or by leveraging wireless connections created between the pico cells. In further aspects, the pico cells enable unified standards across multiple technologies by providing, for example, translation of quality of service ("QoS") standards. Although one or more aspects of the present disclosure will be described with regard to illustrative embodiment or examples, one skilled in the relevant art will appreciate that each aspect of the present disclosure can be implemented separately or that various combination of aspects may be combined. Accordingly, no particular combination of aspects of the present disclosure should be inferred.

A heterogeneous network which supports multiple communication technologies (e.g., communication in accordance with multiple air interface standards) in a unified architecture can provide near-term solutions to capacity problems. Specifically, in one embodiment, a heterogeneous network that includes both macro-base cells and pico cells and that incorporates longer range wireless air interfaces (e.g., second, third, or fourth generation wireless air interface standards) and shorter range wireless air interfaces (e.g., Wi-Fi) can be provided. Such a heterogeneous network can include the coordination of security, quality of service, assessment of mobility of user equipment, authentication, provisioning systems, and the like.

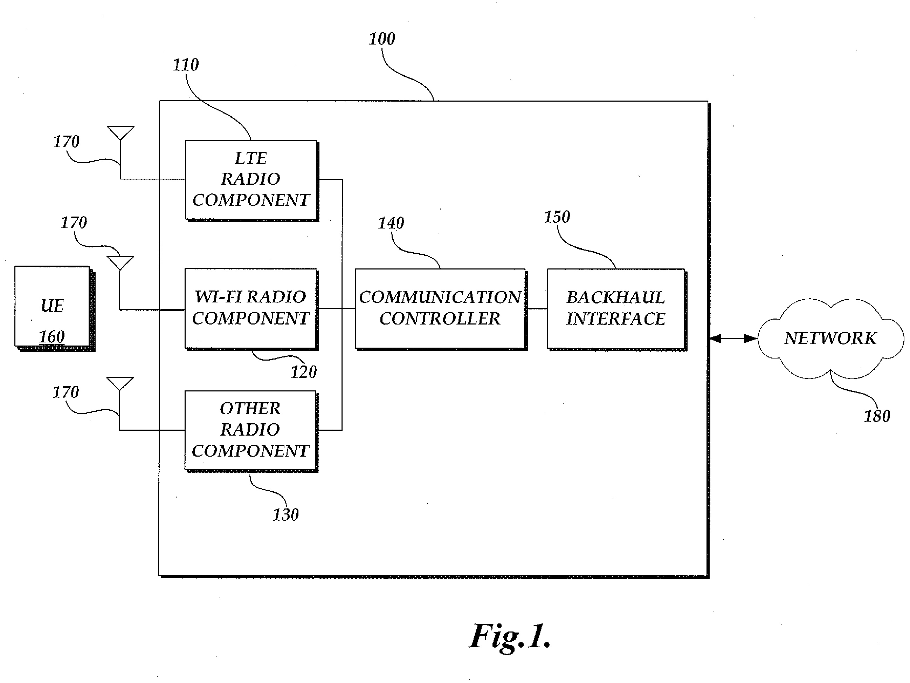

FIGURE 1 is a block diagram of illustrative components of an embodiment of a pico cell 100. As previously described, in one embodiment, the pico cell 100 may be configured to support communications in accordance with multiple air interface standards. FIGURE 1 illustrates an embodiment where two illustrative air interface standards, a longer range wireless air interface standard (e.g., the Long Term Evolution ("LTE") fourth generation air interface standard and a shorter ranger wireless air interface standard (e.g., the Wi-Fi air interface standard) are supported with the same device. Additionally, the pico cell 100 is configured to handoff communications between the different air interface standards within the pico cell, and also between pico cells.

Illustratively, the pico cell 100 includes an integration of a set of components that facilitate transmission of data in accordance with the supported wireless air interface standards, including, but not limited to, antennas, filters, radios, base station control components, network interface components and power supplies. One skilled in the relevant art will appreciate that all such components that could be implemented in a pico cell 100 are not illustrated for purposes of brevity and not limitation. As illustrated in FIGURE 1, the pico cell 100 includes a first and second component for receiving signals transmitted in accordance with the supported air interface standards. In one embodiment, the first radio component can corresponds to an LTE radio 110 and the second radio component can corresponds to a Wi-Fi radio 120. The two radio components can be configured into a form factor that facilitates incorporation into the form factor desired for the pico cell 100. In other embodiments, the radios may be configured to support other technologies, or more or less radios may be present in the pico cell. As also illustrated in FIGURE 1, the pico cell 100 can also include an additional radio component 130 for receiving signals in accordance with an interface standard. The additional radio component 130 can be configured to receive signals in a manner redundant to either the first or second radio components 110, 120 or in a manner additional to the first and second radio components

In various embodiments, the LTE radio component 110 may support frequencies from 700MHz to 2600 MHz in frequency division duplex (FDD) and/or time division duplex (TDD) modes. In FDD embodiments, the LTE radio component 110 may provide a single RF carrier with support of up to 20 MHz FDD channels. In some embodiments, the Wi-Fi radio component 120 may support several frequency bands simultaneously using multiple radios. For example, the Wi-Fi radio component 120 may support communications in the 2.4 GHz and 5 GHz frequency range. Illustratively, the Wi-Fi radio 120 may be configured to have up to 40 MHz channels.

As illustrated in FIGURE 1, the LTE radio component 110 and the Wi-Fi radio component 120 are connected to a base station controller 140. The base station controller 140 includes common base station control software and provides operation and maintenance support for all technologies supported by the pico cell 100. The base station controller 140is also connected to a backhaul interface 150 in the pico cell 100. In various embodiments, the pico cell 100 leverages a Small Form factor Pluggable (SFP) module as the backhaul interface 150. This allows flexibility to backhaul traffic with fiber, PicoEthernet or a large variety of wireless backhaul products. As indicated in FIGURE 1, the pico cell 100 interfaces with various user equipment (UE) 160 through antennas 170, and also with a core network 180.

The UEs 160 may correspond to any computing device having one or more telecommunication components capable of communicating with the pico cell 100 in accordance with wireless air interface standards. The UE 160 can illustratively include mobile phones, personal data assistants (PDAs), smart phones, tablet PCs, personal computing devices, appliances, and the like. Additionally, the telecommunication components capable of communicating with the pico cell 100 can integrated directly into the UE or provided as an add-on component or supplemental component. Still further, the telecommunications components capable of communicating with the pico cell 100 may be shared by two or more UEs. For example, two or more UEs may share communication components utilizing wired connections, often referred to as tethering, or via a wireless communication protocol, often referred to as a hotspot.

In the architecture, the radio components 110, 120 in the pico cell 100 communicate with the carrier's core network 180 using industry standard communication protocols. For example, the LTE radio component 110 can transmit information in accordance with the transfer control protocol ("TCP") and Internet Protocol ("IP") protocols.

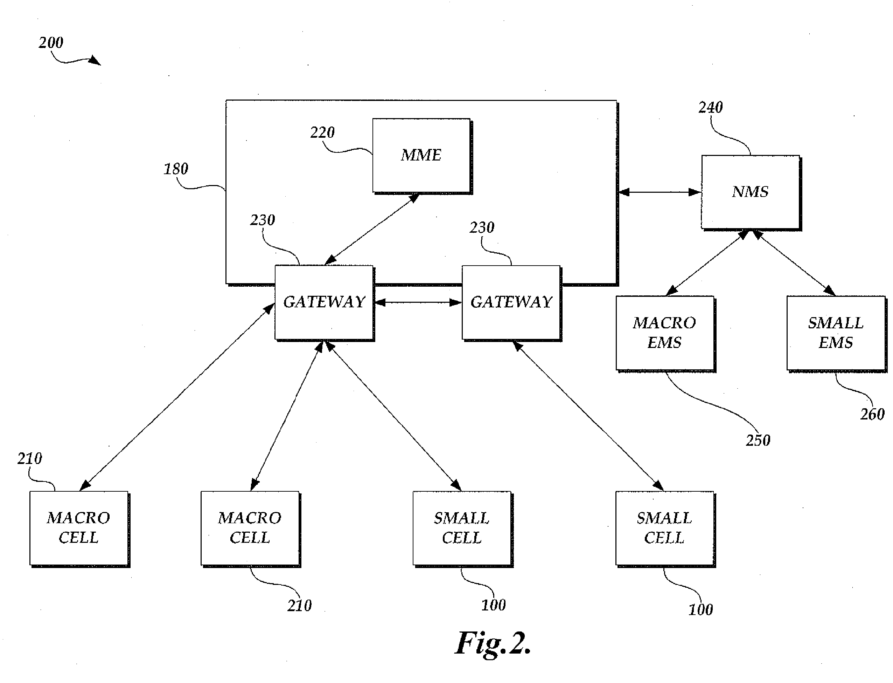

FIGURE 2 is a block diagram of an embodiment of a heterogeneous network 200 including a plurality of pico cells 100 (FIGURE 1). As seen in FIGURE 2, heterogeneous network 200 can include pico cells 100 in combination with network of macro cells 210. In accordance with traditional wireless infrastructure configurations, the pico cells 100 and the macro cells 210 would be in communication with one or more Mobility Management Entity (MME) 220 through one or more serving gateways 230. The communication interface between the pico cells 100 and the serving gateway 230 may be over a network interface, such as a S1 interface. Alternatively, the communication between the pico cells 100 and the serving gateway 230 can be achieved via a public network, such as via S1 interface utilizing a tunneling protocol. In various embodiments, a common network management system (NMS) 240 (also referred to as network management device (NMD)) may be configured to oversee and unify the respective element management systems (EMS) for the macro network (EMS 250) and the pico network (EMS260).

In general, in a heterogeneous network 200 supporting multiple air interface protocols and technologies and including macro cells 210 and pico cells 100, a UE 160 may communicate with a number of macro cells 210 or pico cells 100. In some instances, a UE 160 may sequentially communicate between two macro cells 210. In other instances, a UE 160 may sequentially communicate between a macro cell 210 and a pico cell 100, or vice versa. In still further instances, a UE 160 may sequentially communicate between two pico cells 100. Generally, a handoff between, or an offload from, a first cell (e.g., a micro cell 210 or pico cell 100) and a second cell in which communications between the UE and service provider correspond to the same air interface standard may be referred to as a horizontal handoff or offload. In a similar manner, a handoff between a first cell (e.g., a macro cell 210 or a pico cell 100) in which communications between the UE 160 the service provider utilizes multiple air interface standards can be referred to as a vertical handoff or offload.

Illustratively, handoffs/offloads between two or more different air interface standards within a single pico cell 100 may be referred to as intrapico handoffs/offloads. For example, a single pico cell 100 may elicit handoff of a UE 160 communicating in accordance with the LTE air interface standard to communicate in accordance with the Wi-Fi air interface standard. Handoffs/offloads between two or more pico cells 100 with the same heterogeneous network 200 may be referred to as inter pico handoffs/offloads. As will be explained in greater detail below, in one aspect a pico cell 100 can facilitate intra-pico cell vertical handoff (LTE to/from Wi-Fi). In another aspect, a pico cell 100 can facilitate inter-pico cell horizontal/vertical handoff (LTE to LTE and LTE to/from Wi-Fi) between other pico cells 100 or a macro cell 210.

These offloading capabilities of the pico cell 100 help to increase the possible traffic density or the number of 'megabit per second per square mile' supported by a wireless network. In some embodiments, the traffic from the macro network can be offloaded leveraging Rel. 8 seamless LTE handoff between the macro and the pico cell. Traffic allocation and load balancing decisions consider: user mobility/speed, type of session, current load, user density, location, and business model.

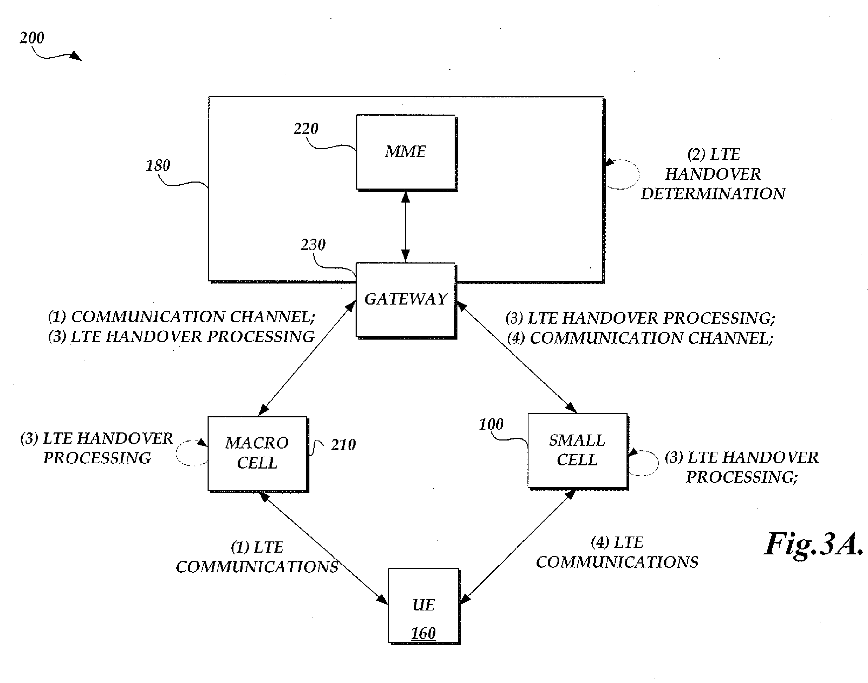

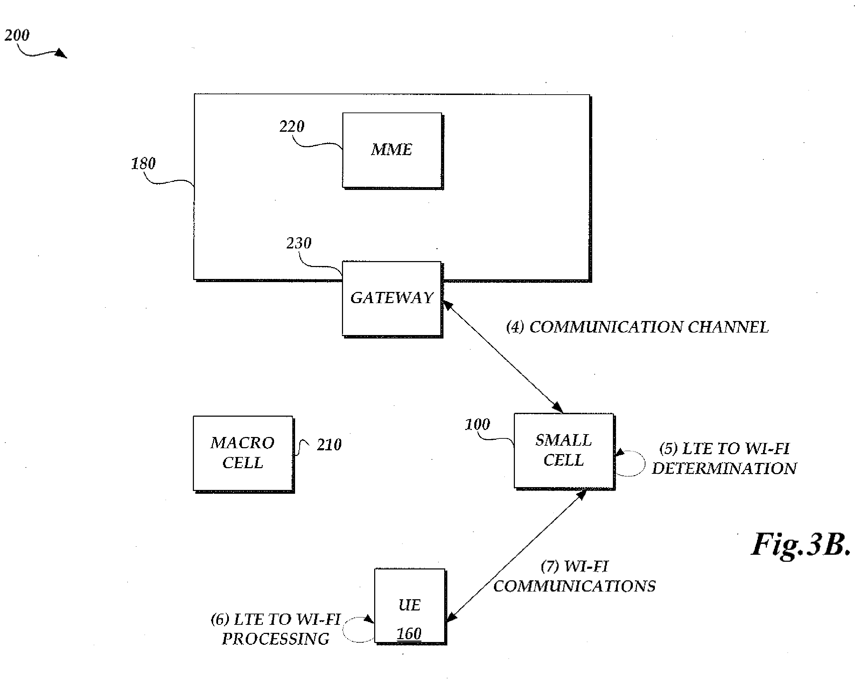

FIGURE 3 is a block diagram of the heterogeneous network 200 of FIGURE 2 illustrating one embodiment of the interaction of components in accordance with a handoff. Specifically, FIGURE 3 illustrates an indirect handoff from a macro cell 210, managing communications with a UE 160 utilizing the LTE air interface standard to a pico cell 100. The communications between the UE 160 and the pico cell 100 will correspond to the Wi-Fi air interface standards.

As indicated by the dotted lines of FIGURE 3, at (1), LTE-based communications are first offloaded from the macro cell 100 to the pico cell 100. The handoff between the macro cell 100 and the pico cell 100 is facilitated such that the pico cell communicates with the UE 160 utilizing the same air interface standards, e.g., the LTE air interface standards. With continued reference to FIGURE 3, at (3), from the receiving pico cell 100 conducts an intra-pico handoff with the UE 160 from the LTE radio component 110 to the pico cell Wi-Fi radio component 120.

By way of an illustrative example, a passenger in a fast moving train may start a data session on their UE 160 connecting through any number of LTE macro cells 210 in a heterogeneous network 200. When the passenger arrives at a destination, communications with the UE 160 may be horizontally handed off to a local pico cell 100 utilizing the LTE air interface standards. The passenger may then be vertically handed off within the same pico cell 100 to the pico cell Wi-Fi network, in an intra-pico handoff. In this scenario, the data session was indirectly handed-off between the macro cell 100 LTE radio component to the pico cell 100 Wi-Fi radio component.

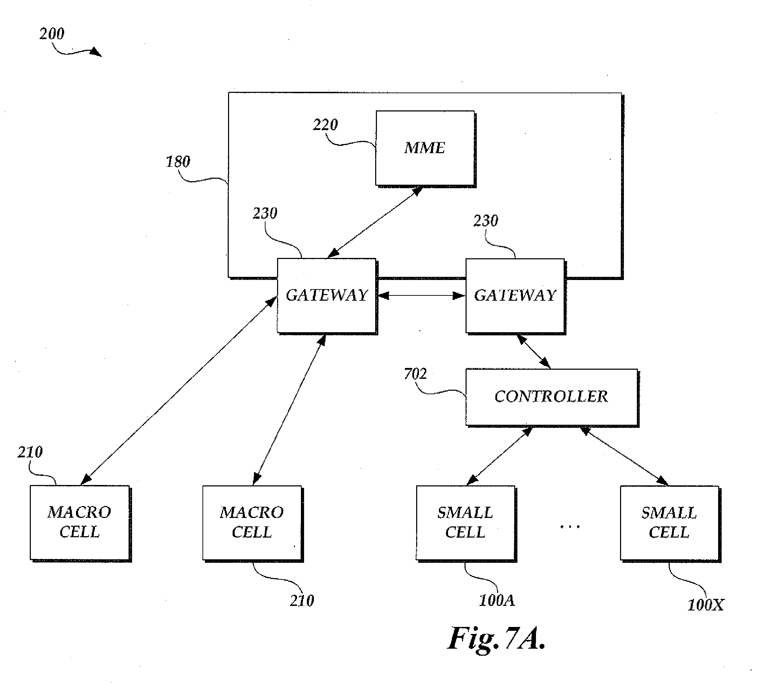

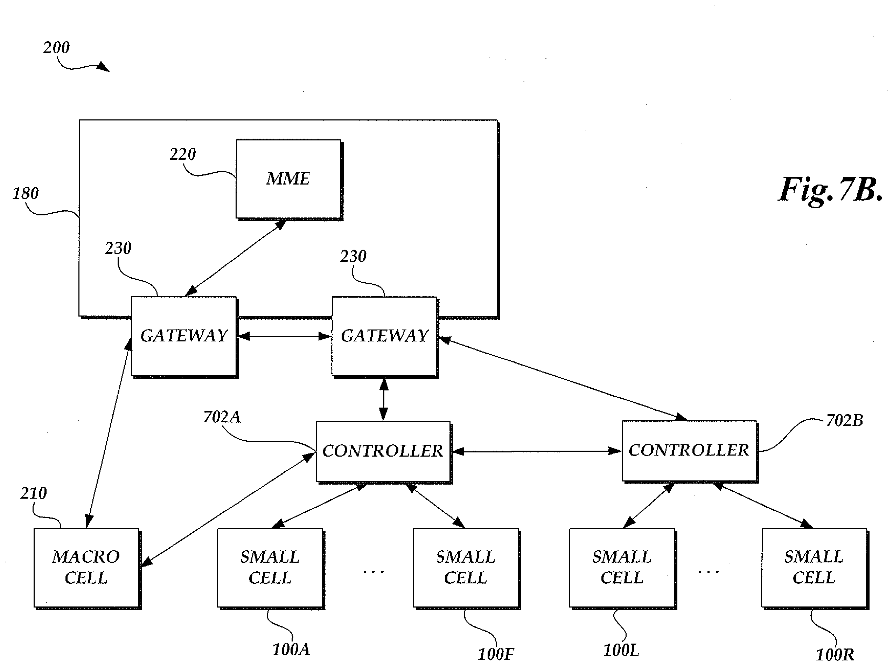

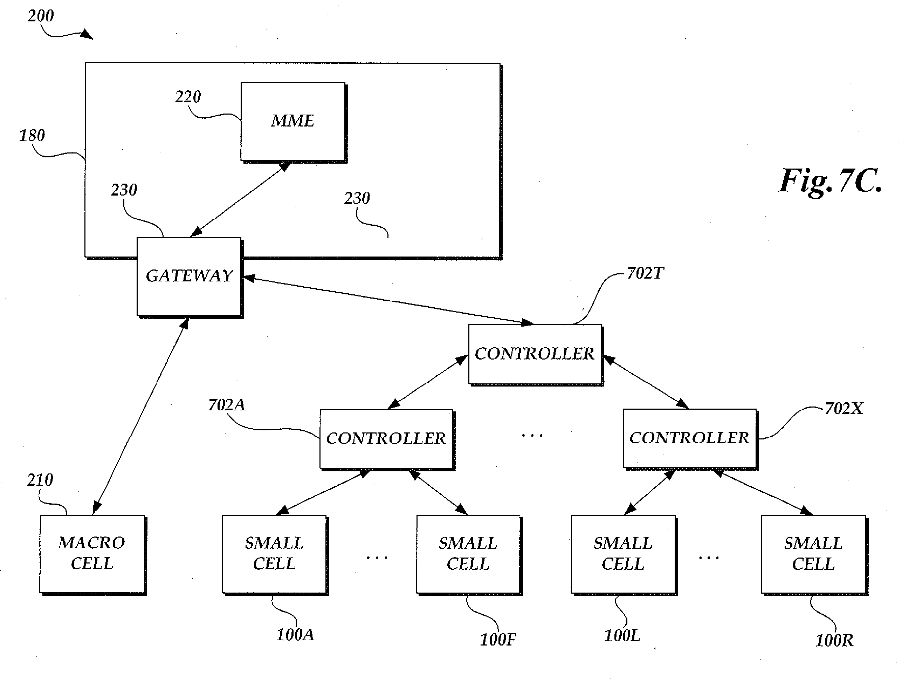

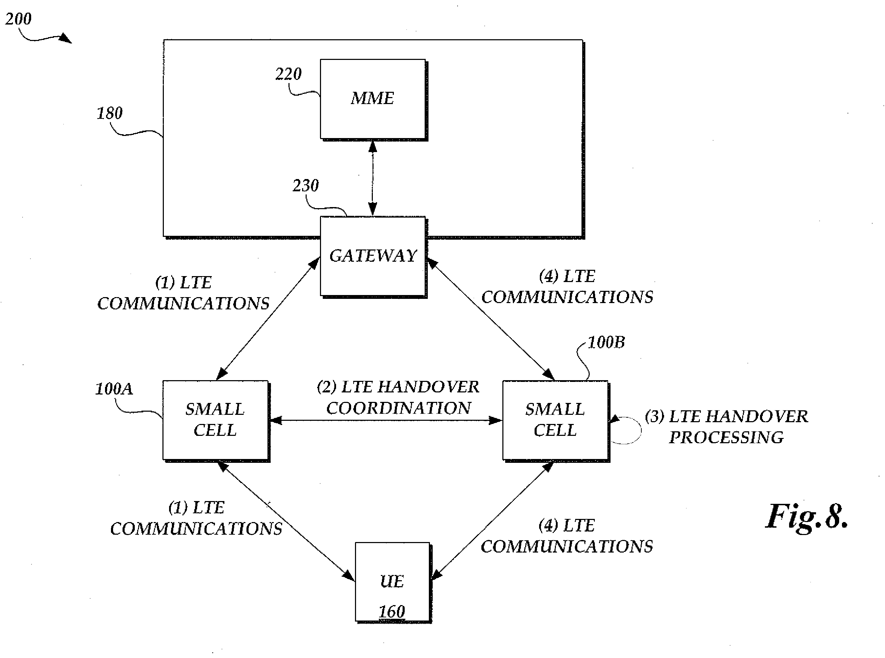

In a different scenario, different handoffs may be accommodated by the pico cell 100. For example, a person in a coffee shop in a mall may start downloading a large data file on their UE 160 over communications in accordance with the Wi-Fi air interface standards. At some point during the transmission, the UE 160 (e.g., the user) may begin movement approaching the limits of the range for the pico cell's Wi-Fi radio component 120. In this scenario, the data session may be handed-off from the Wi-Fi radio component 120 on a pico cell 100 to the LTE radio component 110 on the same pico cell 100. Still further, if the person continues moving in a manner that approaches the limits of the pico cell's LTE radio component 110, then there would be an interpico cell handoff, horizontally (LTE radio component to LTE radio component) between two pico cells. Still further, the receiving pico cell could then possibly instigate a further vertical hand-off to the pico cell's Wi-Fi radio component 120. In this example the data session will experience service continuity through intra and inter pico cell handoffs Wi-Fi-LTE-LTE-Wi-Fi. The control mechanism and the interfaces involved in the inter-pico cell handoff are described further below with reference to FIGURES 7 and 8.

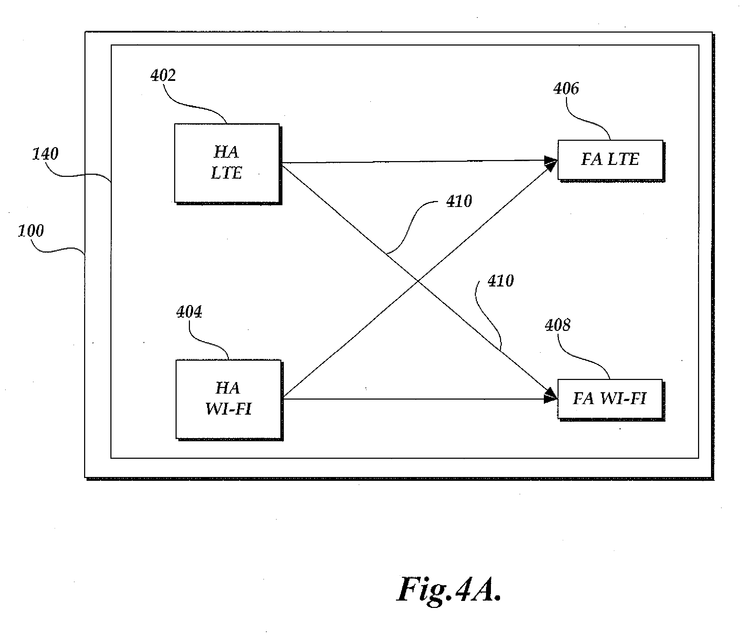

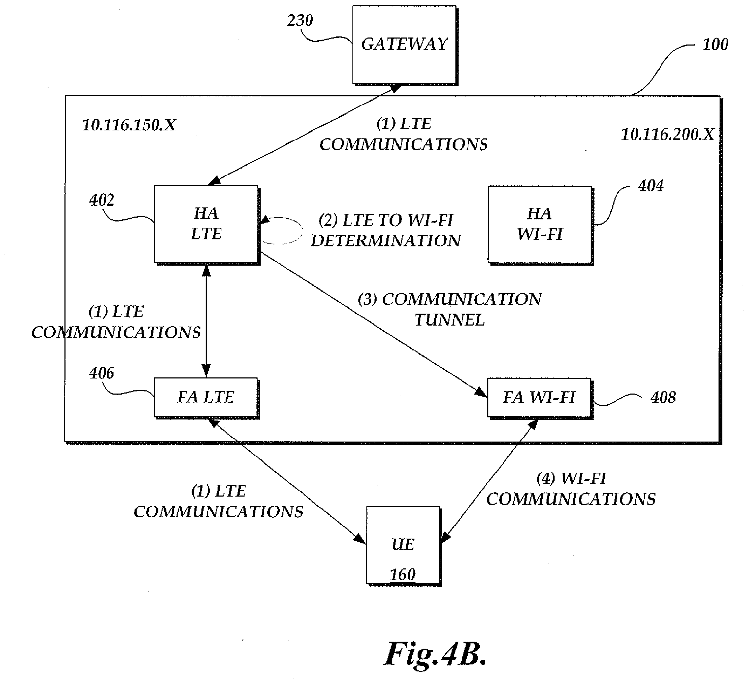

As described above, the pico cell 100 allows for vertical handoffs across multiple air interface standards. Specifically, in an illustrative embodiment, a pico cell 100 may vertically handoff a UE 160 between an LTE radio component 110 and a Wi-Fi radio component 120. FIGURES 4A and 4B illustrate a methodology of the vertical handoff mechanism within a single pico cell 100. In one embodiment, the pico cell 100 can utilize home-foreign agent technology used in the Mobile IP (MIP) standard to facilitate that inter-pico handoff.

Generally, the Mobile IP protocol allows location-independent routing of IP datagrams on the Internet. Each mobile node is identified by its home address disregarding its current location in the Internet. While away from its home network, a mobile node is associated with a care-of address which is associated with its current location and its home address is associated with the local endpoint of a tunnel to its home agent. Mobile IP specifies how a mobile node registers with its home agent and how the home agent routes datagrams to the mobile node through the tunnel. A mobile node has two addresses - a permanent home address and a care-of address (CoA), which is associated with the network the mobile node is visiting. Two kinds of entities comprise a Mobile IP implementation. A home agent stores information about mobile nodes whose permanent home address is in the home agent's network. A foreign agent stores information about mobile nodes visiting its network. Foreign agents also advertise care-of addresses, which are used by Mobile IP. If there is no foreign agent in the host network, the mobile device has to take care of getting an address and advertising that address by its own means.

A node wanting to communicate with the mobile node uses the permanent home address of the mobile node as the destination address that receives packets. Because the home address logically belongs to the network associated with the home agent, normal IP routing mechanisms forward these packets to the home agent. Instead of forwarding packets to a destination that is physically in the same network as the home agent, the home agent redirects these packets towards the remote address through an IP tunnel by encapsulating the datagram with a new IP header using the care of address of the mobile node.

When acting as transmitter, a mobile node sends packets directly to the other communicating node, without sending the packets through the home agent, using its permanent home address as the source address for the IP packets. If needed, the foreign agent could employ reverse tunneling by tunneling the mobile node's packets to the home agent, which in turn forwards them to the communicating node.

With reference to FIGURE 4A, to facilitate inter-pico handoffs, a pico cell 100 includes a home agent (HA) 402 for the LTE air interface standard and a HA 404 for the Wi-Fi air interface standard. Additionally, the pico cell 100 includes a foreign agent (FA) 406 for the LTE air interface standard and a FA 408 for the Wi-Fi air interface standard. Using the MIP tunnel 410 between the home and foreign agents allows the pico cell 100 to make the handovers between LTE and Wi-Fi air interface standards before breaking a connection. The data is offloaded from LTE to Wi-Fi (or vice versa) by switching between the respective MIP tunnels 410, while the data flows from the HA 402, 404 to the respective FAs 404 and 406.

In various scenarios, the HA 402, 404 may pass through the data on a MIP tunnel 410 to one of the FA components utilizing the same air interface from another cell. The HA402, 404 may also switch to a different air interface standard. The various pass through and switch combinations between the HAs 402, 404 for LTE and Wi-Fi and the Fas 406, 408 for LTE and Wi-Fi provide what is referred to as 2x2 support.

To illustrate the HA-FA architecture in more detail, an example intra pico LTE-to-Wi-Fi handoff will now be described with reference to FIGURE 4B. Data may flow on an LTE interface on IP 10.116.150.5 and arrive at a pico cell 100. This data is sent to UEs 106 on both LTE and Wi-Fi interfaces by preserving the original IP address by using the HAs 402, 404 and FAs 406, 408 and the MIP Tunnels 410, as follows.

The pico cell 100 routes the data received on the LTE interface on IP 10.116.150.X on the LTE HA 402. The Wi-Fi interface of the pico cell 100 expects to see traffic from IP addresses 10.116.200.X, and therefore ignores the traffic on the LTE interface. The LTE traffic received by the LTE HA 402 is passed through to the LTE FA 406, and made available to a UE 160 on IP 10.116.150.5, as received.

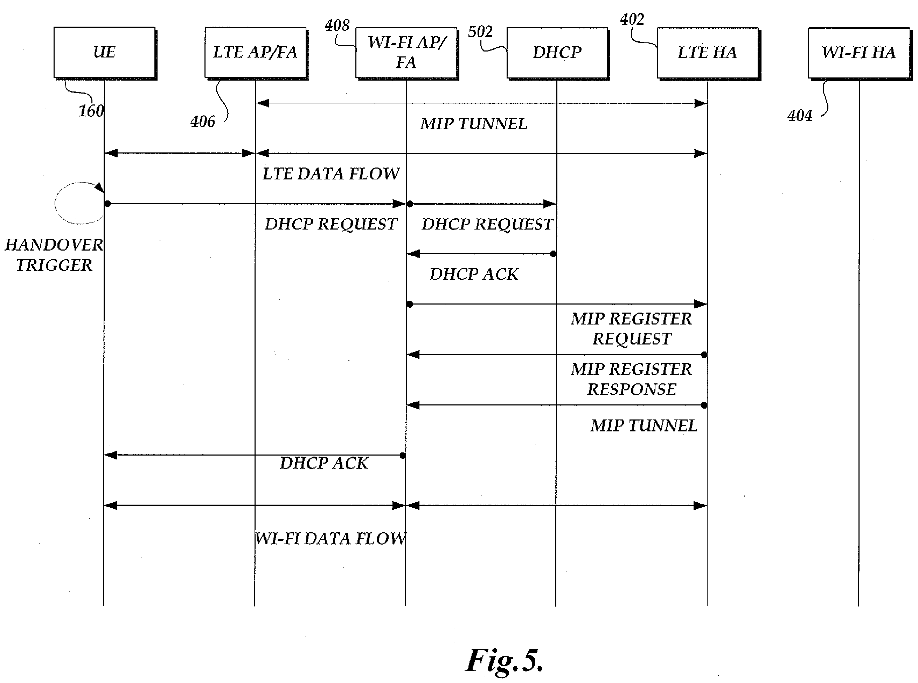

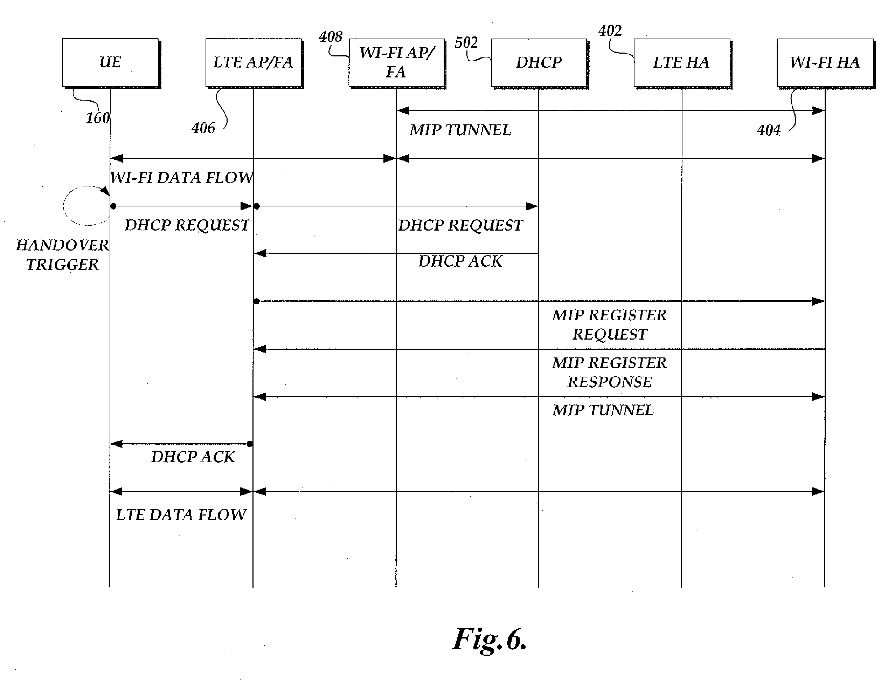

The LTE HA 402 also uses a MIP Tunnel 410 to also switch the data over to the Wi-Fi FA 408 (which has a proxy MIP inside), and provides data on a Wi-Fi interface of a UE 160 with IP 10.116.200.6. Therefore, after handoff to Wi-Fi (via the MIP Tunnel 410), the UE 160 continues to receive data flow, thereby preserving original IP address of the LTE interface. Further details of the handoff process within a pico cell 100 in the two directions (LTE-Wi-Fi and Wi-Fi-LTE) are provided below, with reference to FIGURES 5 and 6.

FIGURE 5 illustrates the handoff process within a pico cell from LTE to Wi-Fi air interface standards. As illustrated in FIGURE 5, initial traffic may be on the LTE interface. Since there is a MIP Tunnel 410 formed between the HA 402 and FA 406 for LTE, there is data flow through the LTE interface from the LTE HA 402 to the LTE Access Point (AP) 406, and to the UE 160. If the UE 160 triggers a handoff, the handoff process is initiated. A handoff may be triggered for a variety of reasons. For example, there may be a problem with the LTE signal, there may be a new Wi-Fi network discovered, the user may have just subscribed to a Wi-Fi network, the user may become less mobile, there may be too many users on the access point, and the like. Once the handoff is triggered, there is a DHCP request sent from the UE 160 to the Wi-Fi FA 408. The Wi-Fi FA 408 then contacts the DHCP server 502, which may be within the pico cell or somewhere on the core network, to obtain a DHCP address. The DHCP server 502 acknowledges the Wi-Fi FA 408 request. Then the Wi-Fi FA 408 sends a MIP Register Request to the LTE HA 402, and the LTE HA 402 responds to the Wi-Fi FA 408, and creates a MIP Tunnel 410 between the LTE HA 402 and the Wi-Fi FA 408. Then the Wi-Fi FA 408 acknowledges the UE's DHCP request, and there is data flow created between the LTE HA 402 and the UE 160.

FIGURE 6 illustrates the handoff process within a pico cell 100 from Wi-Fi to LTE air interface standards. As illustrated in FIGURE 6, initial traffic may be on the Wi-Fi interface. Since there is a MIP Tunnel 410 formed between the HA 404 and FA 408 for Wi-Fi, there is data flow through the Wi-Fi interface from the Wi-Fi HA 404 to the Wi-Fi FA 408, and to the UE 160. If the UE160 triggers a handoff, the handoff process is initiated. Once the handoff is triggered, there is a DHCP request sent from the UE 160 to the LTE FA 406. The LTE FA 406 then contacts the DHCP server 502 within the pico cell 100 to obtain a DHCP address. The DHCP acknowledges the LTE FA 406 request. Then the LTE FA 406 sends a MIP Register Request to the Wi-Fi HA 404, and the Wi-Fi HA 404 responds to the LTE FA 406, and creates a MIP Tunnel 410 between the Wi-Fi HA 404 and the LTE FA 406. Then the LTE FA 406 acknowledges the UE's DHCP request, and there is data flow created between the Wi-Fi HA 404 and the UE 160.

FIGURE 7 illustrates an embodiment of a control mechanism for managing handoffs between pico cells 100 in inter-pico cell handoffs. In some embodiments, it is possible to have the pico cells 100 be autonomous and self-sustaining devices, where each pico cell runs the necessary management functions independently. In such embodiments, the pico cells may be referred to as "standalone" or "autonomous" pico cells. In the embodiment of FIGURE 7, a Wi-Fi/LTE controller 702 is used to run some of the high-level management functions performed on each of the pico cells from one centralized point, thereby enabling the pico cells 100 to be "thin" devices. The high-level management functions may include controlling the quality of service of data across the different technologies, the triggering of handoffs between technologies based on UE 160 mobility, the collection of statistics, the monitoring of signal levels, pre-planning of handoffs in some locations, security management, location tracking, and the like.

The handoff between technologies within a pico cell 100, or an intra vertical handover, can be performed without the controller. An interpico horizontal handover, such as for example from LTE on one pico cell 100 to LTE on another pico cell 100, or from Wi-Fi on one pico cell 100 to Wi-Fi on another pico cell 100, can be accomplished using the controller 702.

With reference again to an illustrative example above where a person in a mall is downloading a large data file on their UE 160 over Wi-Fi air interface standard and then walks outside the coffee shop to another part of the mall, the data session may be handed-off from the Wi-Fi radio component 120 on a first pico cell 100 to the LTE radio component 110 on the same pico cell 100 without using the controller 702. When the person continues walking and arrives to a new pico cell zone, then the interpico cell handoff, horizontally (LTE to LTE) would be coordinated by the controller 702. Then, the vertical hand-off to the Wi-Fi hotspot in the new pico cell can again be controlled by the pico cell itself, without the controller.

The controller 702 can also be used to offload traffic from carrier to an enterprise, for example. There may be a controller for a plurality of pico cells 100 in a carrier network, and another controller for another plurality of pico cells in an enterprise network. When a UE 160 moves from the carrier network (for example from the street) into the enterprise network (for example into a building), the controllers communicate with one another to seamlessly handoff the traffic from the carrier to the enterprise network of pico cells.

FIGURE 8 illustrates the use of an X2 interface in a handoff between "standalone" or "autonomous" pico cells 100. When a controller 702 is not used, the pico cells 100 communicate with one another to coordinate and execute handoffs between them. In some embodiments, it is possible to use the X2 interface, which is an interface allowing the interconnection of pico cells 100 or macro cells 210 to each other. The conventional X2 interface is generally designed to support signaling information between the cells over a wired connection. However, since the pico cells are advantageously capable of supporting Wi-Fi technology over two radio frequency bands, it is possible to use the X2 over the Wi-Fi mesh created between the pico cells 100, using one of the two radio frequency bands, such as for example the 5GHz Wi-Fi band. This enables the execution of inter-pico handoffs via an X2 interface wirelessly. Such a handoff would have improved speed and performance, and also save costs by eliminating the cost of cabling between the cells. In other embodiments, the wireless connection can also be achieved using a TDMA-based mesh protocol instead of, or in addition to the Wi-Fi mesh.

In any of the vertical handover scenarios described above, as well as in any handover between a pico cell and a backhaul network, it is beneficial to ensure a uniform quality of service (QoS) across technologies and/or networks. In order to achieve a uniform QoS, it is important to translate the different QoS standards over the different technologies and networks in order to unify them.

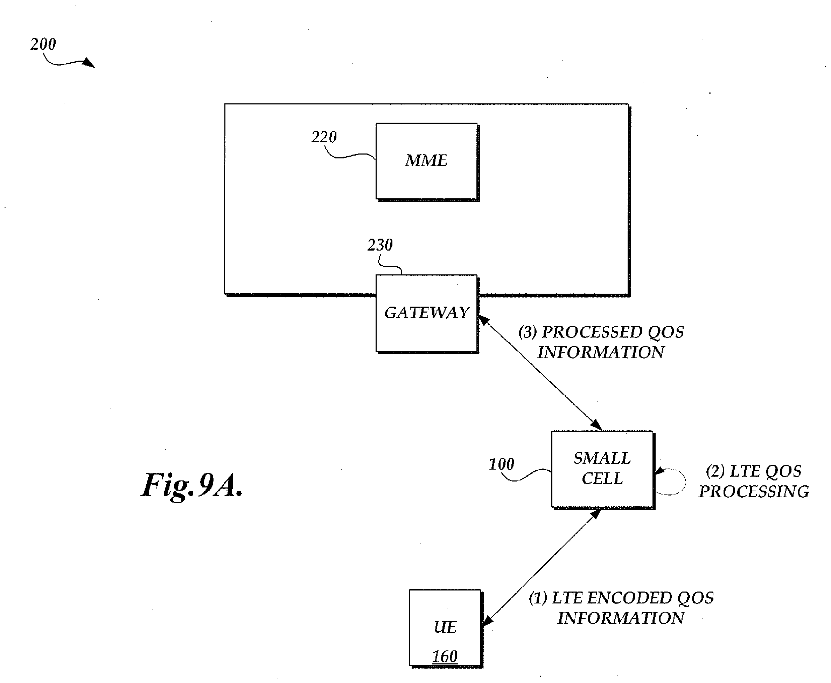

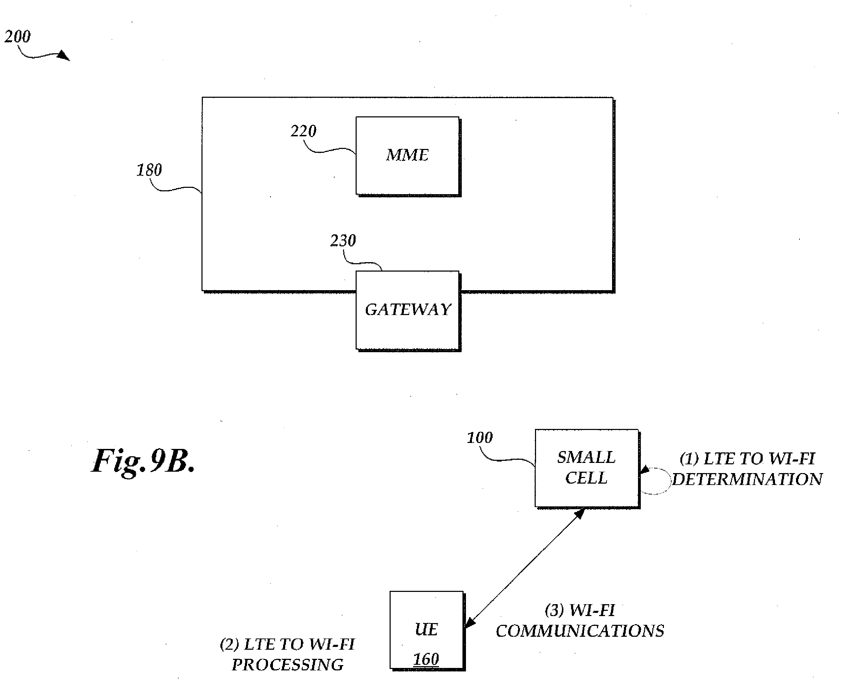

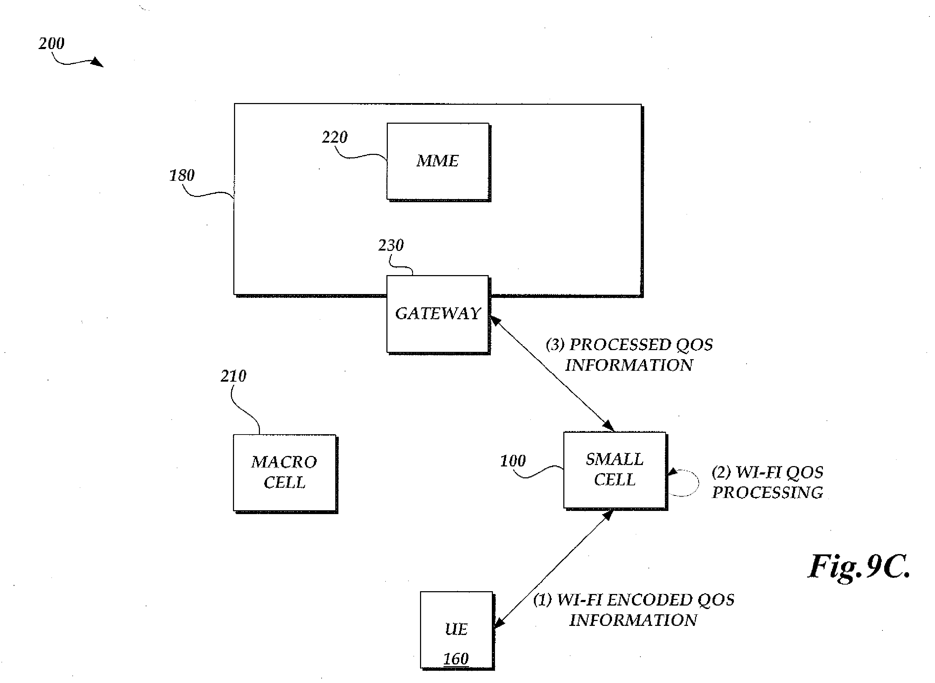

FIGURE 9 illustrates an embodiment of translation of QoS standards within a heterogeneous network 200 (FIGURE 2). In the embodiment shown, the QoS standard to achieve on Wi-Fi traffic from a UE 160 may be in the Wi-Fi Multimedia (WMM) standard. The pico cell 100 translates this WMM standard into the Differentiated Services Code Point (DSCP) standard, and/or the 802.1p standard, and includes the DSCP tag in the generic routing encapsulation (GRE) header used on the GRE tunnel to send traffic on the backhaul network. Similarly, although not shown in FIGURE 9, the QoS standard to achieve on LTE traffic from a UE may be in the QoS Class Identifier (QCI) standard. The pico cell 100 translates this QCI standard into the Differentiated Services Code Point (DSCP) standard, and/or the 802.1p standard, and includes the DSCP tag in the generic routing encapsulation (GRE) header used on the GRE tunnel to send traffic on the backhaul network.

The pico cell would similarly translate the DSCP tag included in the GRE header of the backhaul traffic into the respective WMM and/or QCO standard for sending traffic back to a UE over Wi-Fi and/or LTE.

Another advantage of the pico cell 100 which supports several technologies including LTE and Wi-Fi is that it can improve UE location resolution. Generally, received signal strength indicator (RSSI)-based location tracking uses trilateration to locate UEs such as mobile devices. In trilateration, at least three adjacent access points are needed to resolve any ambiguities. In Wi-Fi networks, neighboring or adjacent access points are assigned different frequency channels to mitigate interference between cells. Therefore, to measure the received power and/or the RSSI of access points near a mobile device, it is necessary to tune to the channels of neighboring access points. This tuning might affect QoS for real-time services (including voice and video) which are sensitive to time delays because the mobile device needs to switch between channels going from data communications to RTLS and back to data communications.

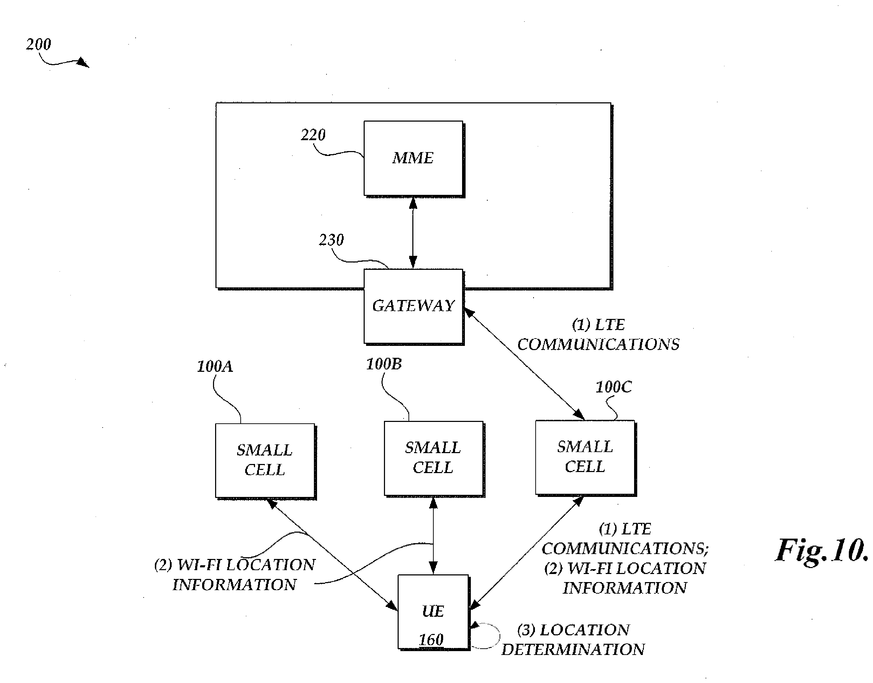

FIGURE 10 illustrates a real-time location system (RTLS) using an embodiment of the pico cell 100. The pico cell 100 allows both the Wi-Fi and LTE interfaces to be used concurrently to determine the location of a UE 160 such as a mobile device. When the mobile device uses Wi-Fi for communication with the Internet (such as for example during a data session), the pico cell 100 can use the LTE interface for determining location of the mobile device. When the UE 160 uses LTE for communication with the Internet or with the provider core network, the pico cell 100 can use the Wi-Fi interface for determining location of the mobile device. The use of the alternate interfaces for communication and locationing enables disruption-free sessions. Additionally, better location resolution is possible since there are a total of six RSSI measurements (three on each frequency band, for example LTE on the 2.1 GHz band and Wi-Fi on the 2.4 GHz band). Without the pico cell's support of multiple technologies, previous systems relied on three measurements on a single interface for both communications and locationing.

While illustrative embodiments have been disclosed and discussed, one skilled in the relevant art will appreciate that additional or alternative embodiments may be implemented within the scope of the present disclosure. Additionally, although many embodiments have been indicated as illustrative, one skilled in the relevant art will appreciate that the illustrative embodiments do not need to be combined or implemented together. As such, some illustrative embodiments do not need to be utilized or implemented in accordance with the scope of variations to the present disclosure.

Conditional language, such as, among others, "can," "could," "might," or "may," unless specifically stated otherwise, or otherwise understood within the context as used, is generally intended to convey that certain embodiments include, while other embodiments do not include, certain features, elements or steps. Thus, such conditional language is not generally intended to imply that features, elements or steps are in any way required for one or more embodiments or that one or more embodiments necessarily include logic for deciding, with or without user input or prompting, whether these features, elements or steps are included or are to be performed in any particular embodiment. Moreover, unless specifically stated otherwise, or otherwise understood within the context as used, is generally intended to convey utilization of the conjunction "or" in enumerating a list of elements does not limit the selection of only a single element and can include the combination of two or more elements.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art. It will further be appreciated that the data and/or components described above may be stored on a computer-readable medium and loaded into memory of the computing device using a drive mechanism associated with a computer-readable medium storing the computer executable components, such as a CD-ROM, DVD-ROM, or network interface. Further, the component and/or data can be included in a single device or distributed in any manner. Accordingly, general purpose computing devices may be configured to implement the processes, algorithms and methodology of the present disclosure with the processing and/or execution of the various data and/or components described above. Alternatively, some or all of the methods described herein may alternatively be embodied in specialized computer hardware. In addition, the components referred to herein may be implemented in hardware, software, firmware or a combination thereof.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A heterogeneous network (200) comprising:
one or more macro cells (210), wherein each macro cell is configured to wirelessly communicate with a mobile device (160) in accordance with a first air interface standard; and
one or more small cells (100), wherein each small cell is configured to wirelessly communicate with the mobile device (160) in accordance with the first air interface standard and a second air interface standard, wherein a geographic range of the first air interface standard is longer than a geographic range of the second air interface standard;
wherein the one or more small cells (100) includes a home agent node (402) and a foreign agent node (406) for the first air interface standard and a home agent node (404) and a foreign agent node (408) for the second air interface standard, wherein the home agent node (402) for the first air interface standard and the home agent node (404) for the second air interface standard are associated with different network addresses, wherein the mobile device has a home address irrespective of its current location and a care-of address associated with its current location,
wherein the home agent nodes are configured to store information about the mobile devices's home address, and wherein the foreign agent nodes are configured to store the care-of address of the mobile device;
wherein communications initiated in accordance with the first air interface standard utilize a communication channel between the home agent node (402) for the first air interface standard and the foreign agent node (406) for the first air interface standard; and
wherein the one or more small cells (100) are configured to conduct intra cell handovers through a communication tunnel between the home agent node (402) for the first interface standard and the foreign agent node (408) for the second air interface standard.

2. The network as recited in claim 1, wherein the first air interface standard is the long term evolution air interface standard and the second air interface standard is the IEEE 802.11 air interface standard.

3. The network as recited in claim 1, wherein the one or more small cells are configured to implement handovers between a macro cell and a small cell, a small cell and a small cell or both.

4. The network as recited in claim 1, wherein communications initiated in accordance with the second interface standard utilize a communication channel between the home agent node for the second air interface standard and the foreign agent node for the second air interface standard.

5. The network as recited in claim 4, wherein the one or more small cells are configured to implement intra cell handovers by utilizing a communication tunnel between the home agent node for the second interface standard and the foreign agent node for the first air interface standard.

6. A method for managing communications with a mobile device (160) in a heterogeneous network (200) comprising :
one or more macro cells (210), wherein each macro cell is configured to wirelessly communicate with the mobile device (160) in accordance with a first air interface standard; and
one or more small cells (100), wherein each small cell is configured to wirelessly communicate with the mobile device (160) in accordance with the first air interface standard and a second air interface standard, wherein a geographic range of the first air interface standard is longer than a geographic range of the second air interface standard;
wherein the one or more small cells (100) includes a home agent node (402) and a foreign agent node (406) for the first air interface standard and a home agent node (404) and a foreign agent node (408) for the second air interface standard, wherein the home agent node (402) for the first air interface standard and the home agent node (404) for the second air interface standard are associated with different network addresses, wherein the mobile device has a home address irrespective of its current location and a care-of address associated with its current location, wherein the home agent nodes store information about the mobile device's home address, and wherein the foreign agent nodes store the care-of address of the mobile device;
the method comprising:
initiating communications in accordance with the first air interface standard utilizing a communication channel between the home agent node (402) for the first air interface standard and the foreign agent node (406) for the first air interface standard; and
conducting, by the one or more small cells (100), intra cell handovers through a communication tunnel between the home agent node (402) for the first interface standard and the foreign agent node (408) for the second air interface standard.

7. An apparatus (100) for a small cell of a heterogeneous network, the apparatus configured to wirelessly communicate with a mobile device (160), the apparatus (100) comprising:
a first radio component (110) configured to facilitate communication in accordance with a first air interface standard;
a home agent node (402) and a foreign agent node (406) configured to facilitate communication in accordance with the first air interface standard;
a second radio component (120) configured to facilitate communication in accordance with a second air interface standard; and
a home agent node (404) and a foreign agent node (408) configured to facilitate communication in accordance with the second air interface standard;
wherein a geographic range of the first air interface standard is longer than a geographic range of the second air interface standard;
wherein the mobile device has a home address irrespective of its current location and a care-of address associated with its current location;
wherein the home agent nodes are configured to store information about the mobile device's home address, and wherein the foreign agent nodes are configured to store the care-of address of the mobile device;
wherein the apparatus is configured to enable intra-cell handovers through a communication tunnel between the home agent node (402) for the first air interface standard and the foreign agent node (408) for the second air interface standard,
wherein the home agent node (402) for the first air interface standard and the home agent node (404) for the second air interface standard are associated with different network addresses, and
wherein the apparatus (100) is also configured to enable communication through a communication tunnel between the home agent node (402) for the first air interface standard and the foreign agent node (406) for the first air interface standard.

8. The apparatus as recited in claim 7, wherein the one or more cells are configured to implement handovers between cells implementing the first and second air interface standards.

9. The apparatus as recited in claim 7, wherein communications initiated in accordance with the first air interface standard are associated with a first network address and wherein communications in accordance with the second air interface standard, responsive to an intra cell handover, are associated with the first network address.

10. The apparatus as recited in claim 7, wherein communications initiated in accordance with the second air interface standard are associated with a second network address and wherein communications in accordance with the first air interface standard, responsive to an intra cell handover, are associated with the second network address.

11. The apparatus as recited in claim 7, wherein the communication tunnel is a mobile IP communication tunnel.

## Patentansprüche

1. Heterogenes Netzwerk (200), das Folgendes umfasst:
eine oder mehrere Makrozellen (210), wobei jede Makrozelle ausgelegt ist zum kabellosen Kommunizieren mit einer mobilen Vorrichtung (160) in Übereinstimmung mit einem ersten Funkschnittstellenstandard; und
eine oder mehrere kleine Zellen (100), wobei jede kleine Zelle ausgelegt ist zum kabellosen Kommunizieren mit der mobilen Vorrichtung (160) in Übereinstimmung mit dem ersten Funkschnittstellenstandard und einem zweiten Funkschnittstellenstandard, wobei eine geografische Reichweite des ersten Funkschnittstellenstandards länger als eine geografische Reichweite des zweiten Funkschnittstellenstandards ist;
wobei die eine oder mehreren kleinen Zellen (100) einen Heimagenten-Knoten (402) und einen Fremdagenten-Knoten (406) für den ersten Funkschnittstellenstandard und einen Heimagenten-Knoten (404) und einen Fremdagenten-Knoten (408) für den zweiten Funkschnittstellenstandard umfassen,
wobei der Heimagenten-Knoten (402) für den ersten Funkschnittstellenstandard und der Heimagenten-Knoten (404) für den zweiten Funkschnittstellenstandard mit unterschiedlichen Netzwerkadressen verbunden sind,
wobei die mobile Vorrichtung eine Heimadresse unabhängig von ihrem aktuellen Ort und eine Care-of-Adresse in Verbindung mit ihrem aktuellen Ort aufweist,
wobei die Heimagenten-Knoten ausgelegt sind zum Speichern von Informationen über die Heimadresse der mobilen Vorrichtungen, und wobei die Fremdagenten-Knoten ausgelegt sind zum Speichern der Care-of-Adresse der mobilen Vorrichtung;
wobei Kommunikationen, die in Übereinstimmung mit dem ersten Funkschnittstellenstandard initiiert werden, einen Kommunikationskanal zwischen dem Heimagenten-Knoten (402) für den ersten Funkschnittstellenstandard und dem Fremdagenten-Knoten (406) für den ersten Funkschnittstellenstandard nutzen; und
wobei die eine oder mehreren kleinen Zellen (100) ausgelegt sind zum Durchführen von zellinternen Übergaben über einen Kommunikationstunnel zwischen dem Heimagenten-Knoten (402) für den ersten Schnittstellenstandard und dem Fremdagenten-Knoten (408) für den zweiten Funkschnittstellenstandard.

2. Netzwerk nach Anspruch 1, wobei der erste Funkschnittstellenstandard der Long-Term-Evolution-Funkschnittstellenstandard ist und der zweite Funkschnittstellenstandard der IEEE-802.11-Funkschnittstellenstandard ist.

3. Netzwerk nach Anspruch 1, wobei die eine oder mehreren kleinen Zellen ausgelegt sind zum Implementieren von Übergaben zwischen einer Makrozelle und einer kleinen Zelle, einer kleinen Zelle und einer kleinen Zelle oder beidem.

4. Netzwerk nach Anspruch 1, wobei Kommunikationen, die in Übereinstimmung mit dem zweiten Schnittstellenstandard initiiert werden, einen Kommunikationskanal zwischen dem Heimagenten-Knoten für den zweiten Funkschnittstellenstandard und dem Fremdagenten-Knoten für den zweiten Funkschnittstellenstandard nutzen.

5. Netzwerk nach Anspruch 4, wobei die eine oder mehreren kleinen Zellen ausgelegt sind zum Implementieren von zellinternen Übergaben durch Nutzen eines Kommunikationstunnels zwischen dem Heimagenten-Knoten für den zweiten Schnittstellenstandard und dem Fremdagenten-Knoten für den ersten Funkschnittstellenstandard.

6. Verfahren zum Verwalten von Kommunikationen mit einer mobilen Vorrichtung (160) in einem heterogenen Netzwerk (200), das Folgendes umfasst:
eine oder mehrere Makrozellen (210), wobei jede Makrozelle ausgelegt ist zum kabellosen Kommunizieren mit der mobilen Vorrichtung (160) in Übereinstimmung mit einem ersten Funkschnittstellenstandard; und
eine oder mehrere kleine Zellen (100), wobei jede kleine Zelle ausgelegt ist zum kabellosen Kommunizieren mit der mobilen Vorrichtung (160) in Übereinstimmung mit dem ersten Funkschnittstellenstandard und einem zweiten Funkschnittstellenstandard, wobei eine geografische Reichweite des ersten Funkschnittstellenstandards länger als eine geografische Reichweite des zweiten Funkschnittstellenstandards ist;
wobei die eine oder mehreren kleinen Zellen (100) einen Heimagenten-Knoten (402) und einen Fremdagenten-Knoten (406) für den ersten Funkschnittstellenstandard und einen Heimagenten-Knoten (404) und einen Fremdagenten-Knoten (408) für den zweiten Funkschnittstellenstandard umfassen,
wobei der Heimagenten-Knoten (402) für den ersten Funkschnittstellenstandard und der Heimagenten-Knoten (404) für den zweiten Funkschnittstellenstandard mit unterschiedlichen Netzwerkadressen verbunden sind,
wobei die mobile Vorrichtung eine Heimadresse unabhängig von ihrem aktuellen Ort und eine Care-of-Adresse in Verbindung mit ihrem aktuellen Ort aufweist,
wobei die Heimagenten-Knoten Informationen über die Heimadresse der mobilen Vorrichtung speichern, und
wobei die Fremdagenten-Knoten die Care-of-Adresse der mobilen Vorrichtung speichern;
wobei das Verfahren Folgendes umfasst:
Initiieren von Kommunikationen in Übereinstimmung mit dem ersten Funkschnittstellenstandard unter Nutzung eines Kommunikationskanals zwischen dem Heimagenten-Knoten (402) für den ersten Funkschnittstellenstandard und dem Fremdagenten-Knoten (406) für den ersten Funkschnittstellenstandard; und
Durchführen, durch die eine oder mehreren kleinen Zellen (100), von zellinternen Übergaben über einen Kommunikationstunnel zwischen dem Heimagenten-Knoten (402) für den ersten Schnittstellenstandard und dem Fremdagenten-Knoten (408) für den zweiten Funkschnittstellenstandard.

7. Einrichtung (100) für eine kleine Zelle eines heterogenen Netzwerks, wobei die Einrichtung ausgelegt ist zum kabellosen Kommunizieren mit einer mobilen Vorrichtung (160), wobei die Einrichtung (100) Folgendes umfasst:
eine erste Funkkomponente (110), ausgelegt zum Ermöglichen von Kommunikation in Übereinstimmung mit einem ersten Funkschnittstellenstandard;
einen Heimagenten-Knoten (402) und einen Fremdagenten-Knoten (406), ausgelegt zum Ermöglichen von Kommunikation in Übereinstimmung mit dem ersten Funkschnittstellenstandard;
eine zweite Funkkomponente (120), ausgelegt zum Ermöglichen von Kommunikation in Übereinstimmung mit einem zweiten Funkschnittstellenstandard; und
einen Heimagenten-Knoten (404) und einen Fremdagenten-Knoten (408), ausgelegt zum Ermöglichen von Kommunikation in Übereinstimmung mit dem zweiten Funkschnittstellenstandard;
wobei eine geografische Reichweite des ersten Funkschnittstellenstandards länger als eine geografische Reichweite des zweiten Funkschnittstellenstandards ist;
wobei die mobile Vorrichtung eine Heimadresse unabhängig von ihrem aktuellen Ort und eine Care-of-Adresse in Verbindung mit ihrem aktuellen Ort aufweist;
wobei die Heimagenten-Knoten ausgelegt sind zum Speichern von Informationen über die Heimadresse der mobilen Vorrichtung, und wobei die Fremdagenten-Knoten ausgelegt sind zum Speichern der Care-of-Adresse der mobilen Vorrichtung;
wobei die Einrichtung ausgelegt ist zum Ermöglichen von zellinternen Übergaben über einen Kommunikationstunnel zwischen dem Heimagenten-Knoten (402) für den ersten Funkschnittstellenstandard und dem Fremdagenten-Knoten (408) für den zweiten Funkschnittstellenstandard,
wobei der Heimagenten-Knoten (402) für den ersten Funkschnittstellenstandard und der Heimagenten-Knoten (404) für den zweiten Funkschnittstellenstandard mit unterschiedlichen Netzwerkadressen verbunden sind, und
wobei die Einrichtung (100) auch ausgelegt ist zum Ermöglichen von Kommunikation über einen Kommunikationstunnel zwischen dem Heimagenten-Knoten (402) für den ersten Funkschnittstellenstandard und dem Fremdagenten-Knoten (406) für den ersten Funkschnittstellenstandard.

8. Einrichtung nach Anspruch 7, wobei die eine oder mehreren Zellen ausgelegt sind zum Implementieren von Übergaben zwischen Zellen, die den ersten und den zweiten Funkschnittstellenstandard implementieren.

9. Einrichtung nach Anspruch 7, wobei Kommunikationen, die in Übereinstimmung mit dem ersten Funkschnittstellenstandard initiiert wurden, mit einer ersten Netzwerkadresse verbunden sind und wobei Kommunikationen in Übereinstimmung mit dem zweiten Funkschnittstellenstandard, in Reaktion auf eine zellinterne Übergabe, mit der ersten Netzwerkadresse verbunden sind.

10. Einrichtung nach Anspruch 7, wobei Kommunikationen, die in Übereinstimmung mit dem zweiten Funkschnittstellenstandard initiiert wurden, mit einer zweiten Netzwerkadresse verbunden sind und wobei Kommunikationen in Übereinstimmung mit dem ersten Funkschnittstellenstandard, in Reaktion auf eine zellinterne Übergabe, mit der zweiten Netzwerkadresse verbunden sind.

11. Einrichtung nach Anspruch 7, wobei der Kommunikationstunnel ein mobiler IP-Kommunikationstunnel ist.

## Revendications

1. Réseau hétérogène (200), comprenant :
une ou plusieurs macrocellules (210), chaque macrocellule étant configurée pour communiquer sans fil avec un dispositif mobile (160) selon une première norme d'interface radio ; et
une ou plusieurs petites cellules (100), chaque petite cellule étant configurée pour communiquer sans fil avec le dispositif mobile (160) selon la première norme d'interface radio et une seconde norme d'interface radio, une portée géographique de la première norme d'interface radio étant plus longue qu'une portée géographique de la seconde norme d'interface radio ;
la ou les petites cellules (100) incluant un nœud agent local (402) et un nœud agent extérieur (406) pour la première norme d'interface radio et un nœud agent local (404) et un nœud agent extérieur (408) pour la seconde norme d'interface radio ;
le nœud agent local (402) pour la première norme d'interface radio et le nœud agent local (404) pour la seconde norme d'interface radio étant associés à différentes adresses de réseau ;
le dispositif mobile ayant une adresse locale indépendante de sa localisation actuelle et une adresse « à l'attention de » associée à sa localisation actuelle ;
les nœuds agents locaux étant configurés pour stocker une information sur l'adresse locale du dispositif mobile et les nœuds agents extérieurs étant configurés pour stocker l'adresse « à l'attention de » du dispositif mobile ;
des communications amorcées selon la première norme d'interface radio utilisant un canal de communication entre le nœud agent local (402) pour la première norme d'interface radio et le nœud agent extérieur (406) pour la première norme d'interface radio ; et
la ou les petites cellules (100) étant configurées pour effectuer des transferts intracellulaires par l'intermédiaire d'un tunnel de communication entre le nœud agent local (402) pour la première norme d'interface et le nœud agent extérieur (408) pour la seconde norme d'interface radio.

2. Réseau selon la revendication 1, dans lequel la première norme d'interface radio est la norme d'interface radio d'évolution à long terme et la seconde norme d'interface radio est la norme d'interface radio IEEE 802.11.

3. Réseau selon la revendication 1, dans lequel la ou les petites cellules sont configurées pour mettre en œuvre des transferts entre une macrocellule et une petite cellule et/ou entre une petite cellule et une petite cellule.

4. Réseau selon la revendication 1, dans lequel des communications amorcées selon la seconde norme d'interface utilisent un canal de communication entre le nœud agent local pour la seconde norme d'interface radio et le nœud agent extérieur pour la seconde norme d'interface radio.

5. Réseau selon la revendication 4, dans lequel la ou les petites cellules sont configurées pour mettre en œuvre des transferts intracellulaires en utilisant un tunnel de communication entre le nœud agent local pour la seconde norme d'interface et le nœud agent extérieur pour la première norme d'interface radio.

6. Procédé de gestion de communications avec un dispositif mobile (160) dans un réseau hétérogène (200) comprenant :
une ou plusieurs macrocellules (210), chaque macrocellule étant configurée pour communiquer sans fil avec le dispositif mobile (160) selon une première norme d'interface radio ; et
une ou plusieurs petites cellules (100), chaque petite cellule étant configurée pour communiquer sans fil avec le dispositif mobile (160) selon la première norme d'interface radio et une seconde norme d'interface radio, une portée géographique de la première norme d'interface radio étant plus longue qu'une portée géographique de la seconde norme d'interface radio ;
la ou les petites cellules (100) incluant un nœud agent local (402) et un nœud agent extérieur (406) pour la première norme d'interface radio et un nœud agent local (404) et un nœud agent extérieur (408) pour la seconde norme d'interface radio ;
le nœud agent local (402) pour la première norme d'interface radio et le nœud agent local (404) pour la seconde norme d'interface radio étant associés à différentes adresses de réseau ;
le dispositif mobile ayant une adresse locale indépendante de sa localisation actuelle et une adresse « à l'attention de » associée à sa localisation actuelle ;
les nœuds agents locaux stockant une information sur l'adresse locale du dispositif mobile et les nœuds agents extérieurs stockant l'adresse « à l'attention de » du dispositif mobile ;
le procédé comprenant les étapes consistant à :
amorcer des communications selon la première norme d'interface radio en utilisant un canal de communication entre le nœud agent local (402) pour la première norme d'interface radio et le nœud agent extérieur (406) pour la première norme d'interface radio ; et
effectuer, par la ou les petites cellules (100), des transferts intracellulaires par l'intermédiaire d'un tunnel de communication entre le nœud agent local (402) pour la première norme d'interface et le nœud agent extérieur (408) pour la seconde norme d'interface radio.

7. Appareil (100) pour une petite cellule d'un réseau hétérogène, l'appareil étant configuré pour communiquer sans fil avec un dispositif mobile (160), l'appareil (100) comprenant :
un premier composant radio (110) configuré pour faciliter une communication selon une première norme d'interface radio ;
un nœud agent local (402) et un nœud agent extérieur (406) configurés pour faciliter une communication selon la première norme d'interface radio ;
un second composant radio (120) configuré pour faciliter une communication selon une seconde norme d'interface radio ; et
un nœud agent local (404) et un nœud agent extérieur (408) configurés pour faciliter une communication selon la seconde norme d'interface radio ;
une portée géographique de la première norme d'interface radio étant plus longue qu'une portée géographique de la seconde norme d'interface radio ;
le dispositif mobile ayant une adresse locale indépendante de sa localisation actuelle et une adresse « à l'attention de » associée à sa localisation actuelle ;
les nœuds agents locaux étant configurés pour stocker une information sur l'adresse locale du dispositif mobile et les nœuds agents extérieurs étant configurés pour stocker l'adresse « à l'attention de » du dispositif mobile ;
l'appareil étant configuré pour permettre des transferts intracellulaires par l'intermédiaire d'un tunnel de communication entre le nœud agent local (402) pour la première norme d'interface radio et le nœud agent extérieur (408) pour la seconde norme d'interface radio ;
le nœud agent local (402) pour la première norme d'interface radio et le nœud agent local (404) pour la seconde norme d'interface radio étant associés à différentes adresses de réseau ; et
l'appareil (100) étant également configuré pour permettre une communication par l'intermédiaire d'un tunnel de communication entre le nœud agent local (402) pour la première norme d'interface radio et le nœud agent extérieur (406) pour la première norme d'interface radio.

8. Appareil selon la revendication 7, dans lequel la ou les cellules sont configurées pour mettre en œuvre des transferts entre des cellules mettant en œuvre les première et seconde normes d'interface radio.

9. Appareil selon la revendication 7, dans lequel des communications amorcées selon la première norme d'interface radio sont associées à une première adresse de réseau et dans lequel des communications selon la seconde norme d'interface radio, en réponse à un transfert intracellulaire, sont associées à la première adresse de réseau.

10. Appareil selon la revendication 7, dans lequel des communications amorcées selon la seconde norme d'interface radio sont associées à une seconde adresse de réseau et dans lequel des communications selon la première norme d'interface radio, en réponse à un transfert intracellulaire, sont associées à la seconde adresse de réseau.

11. Appareil selon la revendication 7, dans lequel le tunnel de communication est un tunnel de communication IP mobile.
